# EUROPÄISCHE PATENTSCHRIFT

(11) **EP 1 249 372 B1**
(45) Veröffentlichungstag und Bekanntmachung des Hinweises auf die Patenterteilung: **21.06.2006**
(21) Anmeldenummer: 02006850.8
(22) Anmeldetag: 26.03.2002
(51) Int. Cl.: B60R 19/48

(54) **Halter für ein Bauteil mit geringen Abmessungen an einem Stossfänger**
Holder for a small size component on a bumper
Support pour un accessoire de petite dimension sur un pare-choc

(30) Priorität: 11.04.2001 DE 10118112
(43) Veröffentlichungstag der Anmeldung: 16.10.2002
(73) Patentinhaber: Dynamit Nobel Kunststoff GmbH, 91781 Weissenburg (DE)
(72) Erfinder: Wachter, Erwin, 91792 Ellingen/Stopfenheim (DE); Wild, René, 91781 Weissburg (DE)
(74) Vertreter: Scherzberg, Andreas Hans

(56) Entgegenhaltungen:
- WO-A-98/52067
- DE-A- 19 626 291
- DE-A- 19 819 698
- DE-A- 19 823 761

## Beschreibung

Die Erfindung betrifft einen Halter für ein Bauteil mit geringen Abmessungen an einem Stoßfänger eines Kraftfahrzeugs entsprechend dem Oberbegriff des ersten Anspruchs.

Stoßfänger von Kraftfahrzeugen werden heutzutage in zunehmendem Maße dazu genutzt, Bauteile geringer Abmessungen zu tragen, bei denen die Position an einem Stoßfänger aufgrund der exponierten Lage für ihre Funktion besonders vorteilhaft ist. So ist es beispielsweise bekannt, Blinker, Begrenzungsleuchten und insbesondere Abstandssensoren (Parktronic-Sensoren, abgekürzt PTS), die den Abstand zu anderen Fahrzeugen oder Hindernissen feststellen und als Einparkhilfen gedacht sind, in die Stoßfänger von Kraftfahrzeugen einzubauen. Unter Stoßfänger ist sowohl ein einteiliger, als auch ein aus Modulen zusammengesetzter Stoßfänger zu verstehen, bei dem die Bauteile jeweils in einem Modul des Stoßfängers eingesetzt sind. Die Befestigung der Bauteile muss so erfolgen, dass bei Einwirkungen auf die Stoßfänger, insbesondere durch stoßartige Belastungen, eine Lockerung oder gar ein Herausfallen unmöglich ist.

Es ist beispielsweise bei Abstandssensoren bekannt, diese zunächst in ein Vorgehäuse einzuschieben und dort in eine Clip-Verbindung einzuclipsen um sie dann mittels dieses Vorgehäuses in die dafür vorgesehene Aufnahme des Stoßfängers einzuclipsen , siehe z.b DE 19819698 A1. Diese Aufnahme ist beispielsweise napfförmig, wird eigens zu diesem Zweck an den Stoßfänger angespritzt oder angeklebt und enthält zum Einrasten des Vorgehäuses entsprechende Ausnehmungen in seiner Wand. Ein solcher Halter erfordert zu seiner Herstellung aufwändige Werkzeuge und aufgrund seiner Zweiteiligkeit einen erhöhten Montage- und Lageraufwand. Die WO98/52067A and DE196262921 A1 beschreiben andere Befestigugen von Halteite pur sensoren an stobfägern.

Es ist deshalb die Aufgabe der vorliegenden Erfindung, einen Halter vorzustellen, dessen Herstellung einfach und kostengünstig ist, der den Bauteilen einen sicheren Halt bietet und trotzdem ein leichtes Auswechseln ermöglicht.

Die Lösung der Aufgabe erfolgt mit Hilfe der kennzeichnenden Merkmale des ersten Anspruchs. Vorteilhafte Ausgestaltungen der Erfindung werden in den Unteransprüchen beansprucht.

Gegenüber den bekannten Haltern weist ein erfindungsgemäßer Halter einen sehr einfachen Aufbau auf. Der Halter besteht in seinen wesentlichen Bestandteilen aus zwei Zungen, die jeweils über einen Fuß fest mit dem Stoßfänger oder, bei einem modularen Aufbau eines Stoßfängers, mit einem seiner Module verbunden sind. Diese Zungen sind elastisch und stehen senkrecht zur der Oberfläche des Stoßfängers an der Öffnung, welche das Bauteil aufnimmt.

Auf Grund des einfachen Aufbaus der zum Formen der Zungen erforderlichen Werkzeuge lassen sich die Zungen bereits bei der Formgebung des gesamten Stoßfängers oder, bei einem modularen Aufbau, eines Moduls des Stoßfängers gleichzeitig mit anformen. Weil der Halter einstückig im Stoßfänger integriert ist, entfällt ein bisher erforderliches zusätzliches Teil und dessen Vormontage. Die Verbindung des Bauteils mit den Zungen erfolgt vorteilhaft lösbar mittels einer Clip-Verbindung, wobei in bekannter Weise nasenförmige Vorsprünge in Ausnehmungen oder Hinterschneidungen einrasten.

In weiterer Ausgestaltung der Erfindung sind die Zungen des Halters auf mindestens einer Seite der Öffnung zur Aufnahme des Bauteils in ihrem Fußbereich durch einen Steg miteinander verbunden, der im wesentlichen die Außenkontur des aufzunehmenden Bauteils aufweist. Dieser Steg macht den Halter stabil, hält das Bauteil in seiner Position und erleichtert seinen Einbau durch die mögliche seitliche Führung beim Einschieben in den Halter. Dem Halter wird besondere Stabilität verliehen, wenn der Steg mit dem Modul oder dem Stoßfänger über eine dünne Wand verbunden ist.

Der Steg zwischen den beiden Zungen kann aber auch durch einen Spalt von dem Stoßfänger oder dem Modul des Stoßfängers getrennt sein, was eine elastischere Ausführung ergibt Das Spritzen und Ausformen des Halters wird auch vereinfacht, insbesondere dann, wenn die Fläche des Stoßfängers oder des Moduls gewölbt ist.

Dadurch, dass in einer weiteren Ausgestaltung der Erfindung mindestens eine der Zungen mit dem Steg elastisch verbunden ist, wird das Einführen des Bauteils in den Halter und das eventuelle wieder Lösen daraus erleichtert. Die Elastizität kann dadurch erreicht werden, dass sich zwischen Zunge und Steg eine Einkerbung befindet.

An Hand eines Ausführungsbeispiels wird die Erfindung näher erläutert.

Es zeigen:
- Figur 1: eine perspektivische Ansicht des Halters in einem Modul eines Stoßfängers,
- Figur 2: eine Aufsicht auf den Halter im Modul des Stoßfängers und
- Figur 3: einen Schnitt durch das Modul mit einem in den Halter eingesetzten Abstandssensor.

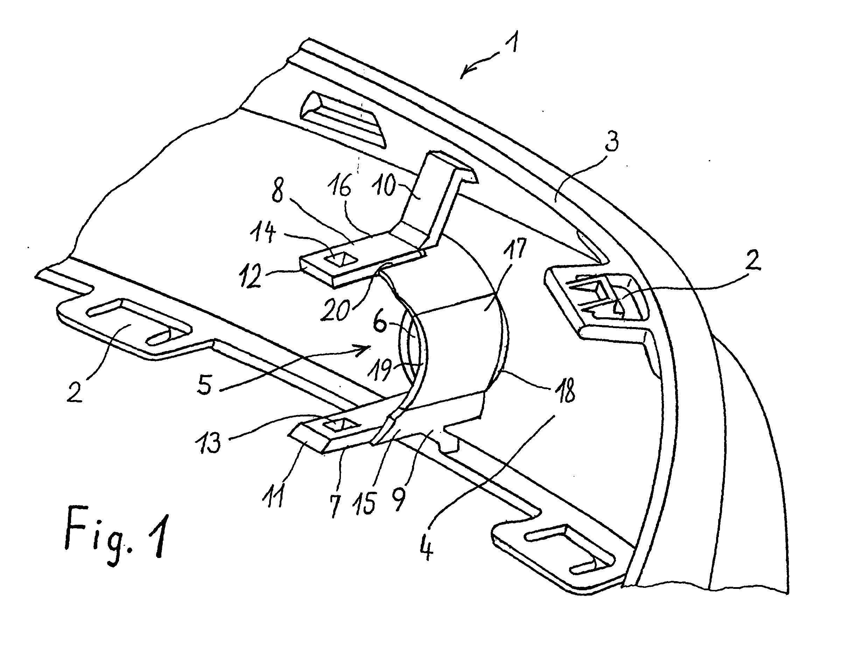

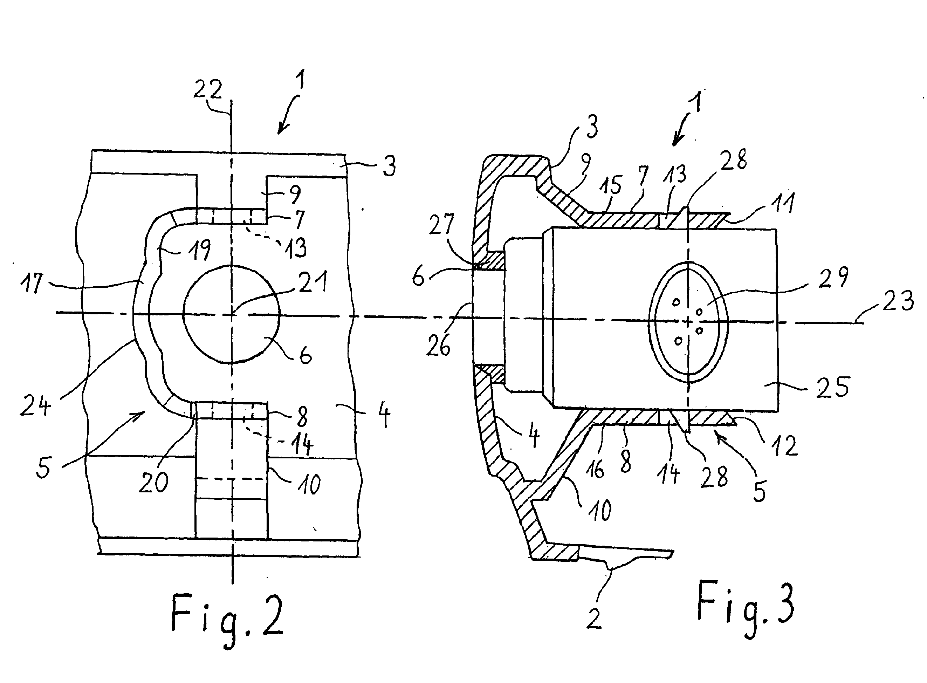

Mit 1 ist ein Modul eines hier nicht vollständig dargestellten Stoßfängers bezeichnet. Befestigungsmittel 2 in Form von Rastnasen am Rand 3 des Moduls 1 ermöglichen das Einclipsen in die Grundstruktur des Stoßfängers. Die Form 4 des Moduls 1 ist gewölbt. Ein erfindungsgemäßer Halter 5 auf der Innenseite des Moduls 1 nimmt im vorliegenden Ausführungsbeispiel einen Abstandssensor 25, einen PTS, auf, wie in Figur 3 dargestellt. Der Abstandssensor 25 blickt durch eine kreisförmige Öffnung 6 in dem Modul 1, wobei die Abdeckung 26 der Sensoröffnung mit der äußeren Kontur 4 des Moduls 1 abschließt. Die Öffnung 6 wird in der Figur 1 durch den Halter 5 fast vollständig verdeckt.

Die Hauptmerkmale des Halters 5 sind die beiden Zungen 7 und 8. Mit ihren Füßen 9 bzw. 10 sind sie an das Modul 1 angespritzt. Zum besseren Einführen des Abstandssensors sind ihre freien Zungenenden, 11 an der Zunge 7 und 12 an der Zunge 8, abgeschrägt. Eine Ausnehmung 13 an der Zunge 7 und 14 an der Zunge 8 dient jeweils dazu, die nasenförmigen Vorsprünge 28 an dem Gehäuse des Abstandssensors 25 aufzunehmen und damit eine Clip-Verbindung herzustellen, wie aus Figur 3 ersichtlich.

Der Fußbereich 15 der Zunge 7 sowie der Fußbereich 16 der Zunge 8 sind mittels eines Stegs 17 verbunden, der im wesentlichen die Kontur des zu haltenden Abstandssensors aufweist. Der Steg 17 ist im vorliegenden Ausführungsbeispiel durch einen Spalt 18 von der gewölbten Fläche 4 des Moduls 1 getrennt, wodurch das Spritzen mit dem Modul erleichtert und das elastische Verhalten des Halters verbessert wird. In einer anderen Ausführung kann der Steg 17 durch eine dünne Wand an die gewölbte Fläche 4 des Moduls oder des Stoßfängers 1 angebunden sein. Der obere Rand 19 des Stegs 17 ist nach innen weisend, das heißt zur Öffnung hin gerichtet abgeschrägt, um das Einführen des Abstandssensors zu erleichtern.

Um eine lösbare Clip-Verbindung zwischen dem Abstandssensor und dem Halter 5 herstellen zu können, muss mindestens eine der Zungen mit dem Steg 17 elastisch verbunden sein. Im vorliegenden Ausführungsbeispiel ist die Zunge 8 mit dem Steg 17 elastisch gekoppelt. Vom oberen Rand 19 des Stegs 17 ausgehend erstreckt sich eine Einkerbung 20 zwischen der Zunge 8 und dem Steg 17 bis etwa über zwei Drittel der Höhe des Stegs. Dadurch ist es möglich, dass beim Einschieben des Abstandssensors in den Halter 5 die Zunge 8 ungehindert von dem Steg 17 zurückweichen kann. Der Halter 5 ist aus einem Kunststoff gefertigt, der eine gewisse Elastizität aufweist und somit das Zurückfedern der Zungen 7 und insbesondere der Zunge 8 beim Herstellen der Clip-Verbindung ermöglicht, ohne dass die Zungen dadurch abbrechen.

In Figur 2 ist eine Aufsicht auf die Rückseite des Moduls 1 im Bereich des Halters 5 dargestellt. Durch den Mittelpunkt 21 der Öffnung 6 verlaufen im rechten Winkel zueinander die Symmetrielinien 22 und 23. Über die Füße 9 und 10, welche die Symmetrielinie 22 schneidet, ist der Halter 5 mit dem Modul verbunden. Die beiden Zungen 7 und 8 liegen sich auf der Symmetrielinie 22 gegenüber. Der Steg 17 umschließt die Öffnung 6, wobei die Ausbuchtung 24 der Kontur des aufzunehmenden Abstandssensors entspricht.

Die Ansicht in Figur 3 entspricht einem Schnitt in der Ebene entlang der Symmetrielinie 22. In dieser Figur ist der Abstandssensor 25, in den Halter 5 eingesetzt, dargestellt. Der Abstandssensor 25 reicht mit seiner Sensoröffnung, deren Abdeckung 26 mit der Oberfläche des Moduls 1 abschließt, durch die Öffnung 6 und stützt sich über einen Ring 27 aus einem elastischen Material auf dem Rand der Öffnung 6 ab. Die Zungen 7 und 8 liegen an der Außenkontur des Abstandssensors 25 an. Die nasenförmigen Vorsprünge 28 an dem Gehäuse des Abstandssensors 25 greifen in die Ausnehmung 13 der Zunge 7 beziehungsweise die Ausnehmung 14 der Zunge 8 und fixieren damit den Abstandssensor 25 in dem Halter 5. Dargestellt ist auch die Steckverbindung 29 zum Anschluss der Signalleitung an die hier nicht dargestellte elektronische Schaltung des Sensors.

## Patentansprüche

1. Halter (5) für ein Bauteil mit geringen Abmessungen, insbesondere einen Abstandssensor, an einem Stoßfänger (1) eines Kraftfahrzeugs, wobei das Bauteil den Stoßfänger in einer Öffnung (6) durchdringt und der Halter (5) zwei elastische, an der Öffnung (6) gegenüberliegend positionierte Zungen (7, 8) aufweist, mit denen das Bauteil mittels einer lösbaren Verbindung in seiner vorbestimmten Position fixierbar ist, **dadurch gekennzeichnet, dass** die Zungen (7, 8) jeweils über einen Fuß (9, 10) fest mit dem Stoßfänger (1), bei einem modularen Aufbau des Stoßfängers mit einem seiner Module, verbunden sind und der Halter (5) einstücng mit dem Stoßfänger (1) oder dem Modul des Stoßfängers hergestellt ist.

2. Halter nach Anspruch 1, **dadurch gekennzeichnet, dass** die Zungen (7, 8) mindestens an einer Seite der Öffnung (6) im Bereich ihrer Füße (9, 10) durch einen Steg (17) miteinander verbunden sind.

3. Halter nach Anspruch 2, **dadurch gekennzeichnet, dass** der Steg (17) im Wesentlichen die Außenkontur des Bauteils (25) aufweist.

4. Halter nach einem der Ansprüche 1 bis 3, **dadurch gekennzeichnet, dass** der Steg (17) zwischen den beiden Zungen (7, 8) durch einen Spalt (18) von dem Stoßfänger (1) getrennt ist.

5. Halter nach einem der Ansprüche 1 bis 3, **dadurch gekennzeichnet, dass** der Steg (17) zwischen den beiden Zungen (7, 8) mit dem Stoßfänger (1) verbunden ist.

6. Halter nach einem der Ansprüche 1 bis 5, **dadurch gekennzeichnet, dass** zwischen mindestens einer der Zungen (8) und dem Steg (17) eine elastische Verbindung besteht.

7. Halter nach Anspruch 6, **dadurch gekennzeichnet, dass** zwischen der Zunge (8) und dem Steg (17) eine Einkerbung (20) vorgesehen ist.

8. Verfahren zur Herstellung eines Haltert für ein Bauteil mit geringen Abmessungen, insbesondere einen Abstandssensor, an einem Stoßfänger oder dem Modul eines Stoßfängers eines Kraftfahrzeugs, wobei das Bauteil den Stoßfänger in einer Öffnung durchdringt und der Halter zwei elastische, an der Öffnung gegenüberliegend positionierte Zungen aufweist, mit denen das Bauteil mittels einer lösbaren Verbindung in seiner vorbestimmten Position fixierbar ist, insbesondere für einen Halter nach einem der Ansprüche 1 bis 7, **dadurch gekennzeichnet, dass** der Halter einstückig mit dem Stoßfänger oder dem Modul des Stoßfängers hergestellt wird.

## Claims

1. Holder (5) for a component with small dimensions, in particular a distance sensor, on a bumper (1) of a motor vehicle, with the component penetrating the bumper in an opening (6) and the holder (5) having two elastic tongues (7, 8) that are positioned at the opening (6) so that they lie opposite each other and with which the component can be fixed in its predetermined position by means of a detachable connection, **characterised in that** the tongues (7, 8) are fixedly connected by way of a respective foot (9, 10) to the bumper (1), in the case of a modular structure of the bumper to one of its modules, and the holder (5) is produced so that it is in one piece with the bumper (1) or the module of the bumper.

2. Holder according to claim 1, **characterised in that** the tongues (7, 8) are connected together by means of a cross-piece (17) at least on one side of the opening (6) in the region of their feet (9, 10).

3. Holder according to claim 2, **characterised in that** the cross-piece (17) has substantially the outer contour of the component (25).

4. Holder according to one of claims 1 to 3, **characterised in that** the cross-piece (17) between the two tongues (7, 8) is separated from the bumper (1) by a gap (18).

5. Holder according to one of claims 1 to 3, **characterised in that** the cross-piece (17) between the two tongues (7, 8) is connected to the bumper (1).

6. Holder according to one of claims 1 to 5, **characterised in that** there is an elastic connection between at least one of the tongues (8) and the cross-piece (17).

7. Holder according to claim 6, **characterised in that** a notch (20) is provided between the tongue (8) and the cross-piece (17).

8. Method for producing a holder for a component with small dimensions, in particular a distance sensor, on a bumper or the module of a bumper of a motor vehicle, with the component penetrating the bumper in an opening and the holder having two elastic tongues that are positioned at the opening so that they lie opposite each other and with which the component can be fixed in its predetermined position by means of a detachable connection, in particular for a holder in accordance with one of claims 1 to 7, **characterised in that** the holder is produced so that it is in one piece with the bumper or the module of the bumper.

## Revendications

1. Support (5) pour un élément de construction de dimensions réduites, en particulier un capteur de proximité, sur un pare-chocs (1) d'un véhicule automobile, l'élément de construction traversant le pare-chocs dans une ouverture (6) et le support (5) présentant deux pattes (7, 8) élastiques disposées sur l'ouverture (6), en vis-à-vis l'une de l'autre, qui permettent de maintenir l'élément de construction par une liaison libérable dans sa position prédéterminée, **caractérisé par le fait que** les pattes (7, 8) sont liées chacune par l'intermédiaire d'une base (9, 10) solidement au pare-chocs (1) ou, lorsque celui-ci présente une structure modulaire, à l'un de ses modules, et le support (5) est réalisé d'une seule pièce avec le pare-chocs (1) ou avec le module du pare-chocs.

2. Support selon la revendication 1, **caractérisé par le fait que** les pattes (7, 8), dans la région de leurs bases (9, 10), sont reliées entre elles par une cloison (17), au moins sur un côté de l'ouverture (6).

3. Support selon la revendication 2, **caractérisé par le fait que** la cloison (17) présente sensiblement le contour extérieur de l'élément de construction (25).

4. Support selon une des revendications 1 à 3, **caractérisé par le fait que** la cloison (17) située entre les deux pattes (7, 8) est séparée du pare-chocs (1) par un espace (18).

5. Support selon une des revendications 1 à 3, **caractérisé par le fait que** la cloison (17) entre les deux pattes (7, 8) est liée au pare-chocs (1).

6. Support selon une des revendications 1 à 5, **caractérisé par le fait qu'**il existe une liaison élastique entre au moins une des pattes (8) et la cloison (17).

7. Support selon la revendication 6, **caractérisé par le fait qu'**une encoche (20) est prévue entre la patte (8) et la cloison (17).

8. Procédé de fabrication d'un support pour un élément de construction de dimensions réduites, en particulier un capteur de proximité, sur un pare-chocs ou le module d'un pare-chocs d'un véhicule automobile, l'élément de construction traversant le pare-chocs dans une ouverture et le support présentant deux pattes élastiques disposées sur l'ouverture, en vis-à-vis l'une de l'autre, qui permettent de maintenir l'élément de construction par une liaison libérable dans sa position prédéterminée, en particulier pour un support selon une des revendications 1 à 7, **caractérisé par le fait que** le support est réalisé d'une seule pièce avec le pare-chocs ou le module du pare-chocs.
